# DEMANDE DE BREVET EUROPEEN

(11) **EP 1 000 964 A1**
(43) Date de publication de la demande: **17.05.2000**
(21) Numéro de dépôt: 99402780.3
(22) Date de dépôt: 05.11.1999
(51) Int. Cl.: C08J 9/00, C08L 63/00

(54) **Matériaux alvéolaires contenant un polymère thermoplastique, une résine époxyde modifée et un agent porogène**

(30) Priorité: 13.11.1998 FR 9814320
(71) Demandeur: INSTITUT FRANCAIS DU PETROLE, 92500 Rueil Malmaison (FR)
(72) Inventeur: Bonnet, Anthony, 38510 Passins (FR); Pascault, Jean-Pierre, 69100 Villeurbanne (FR); Sautereau, Henri, 69120 Vaulx en Velin (FR); Camberlin, Yves, 69300 Caluire (FR); Grenier, Jacky, 38890 Vignieu (FR)

(57) **Abrégé**

Matériaux alvéolaires comprenant au moins un polymère thermoplastique choisi dans le groupe formé par les polyétherimides, les polysulfones et les polyphénylène-éthers, au moins une résine époxyde modifiée par au moins une polyamine aromatique et au moins un agent porogène ou le (ou les) produit(s) de dégradation dudit agent porogène, leurs synthèses et leurs utilisations.

## Description

### Domaine de l'invention

L'invention concerne des matériaux alvéolaires thermostables, un procédé de synthèse de ces matériaux et les utilisations de ces matériaux, notamment dans le domaine de l'exploitation pétrolière et dans tous les domaines où il est souhaitable d'avoir des matériaux alvéolaires ayant une bonne résistance au feu et procurant une bonne isolation phonique et thermique. Ces matériaux alvéolaires sont parfois dénommés matériaux en mousse, matériaux cellulaires ou matériaux expansés.

### Arrière-plan de l'invention

De très nombreux documents décrivent des matériaux cellulaires rigides ou flexibles ayant de bonnes propriétés de tenue thermique et de tenue au feu, ainsi que diverses méthodes de fabrication de ces produits. L'une des plus anciennes techniques de fabrication de matériaux alvéolaires à base de polyimides, décrite entre autre dans les brevets US-A-3 249 561 et US-A-3 883 452 au nom de Du Pont de Nemours, consiste à fabriquer une mousse de polyimide à partir d'une solution de polyamide-acide en présence d'un agent qui se décompose au cours du chauffage permettant la formation du polyimide, en libérant un gaz comme le dioxyde de carbone ou le monoxyde de carbone. Ce procédé est relativement délicat à mettre en oeuvre, car le polymère de départ est en solution diluée dans un solvant organique polaire et qu'il faut gouverner simultanément l'évaporation du solvant, la réaction d'imidation et la formation de la structure cellulaire. Avec les polyimides thermoplastiques comme les polyétherimides, vendus par la société General Electric Plastics sous le nom commercial d'ULTEM®, c'est l'addition d'un agent porophore (parfois aussi dénommé porogène) qui a été utilisée pour créer la structure cellulaire, comme cela est décrit par exemple dans le brevet US-A-4 532 263 au nom de Mobil Oil. Une autre méthode, décrite par exemple dans le brevet US-A-4 007 922 au nom de la société Upjohn, consiste à mélanger ce type de polyimides avec des microsphères creuses.

Une méthode qui a fait l'objet d'un très grand nombre de publications consiste à synthétiser les polyimides en faisant réagir sur une diamine ou sur un mélange de plusieurs diamines un bis(ortho-acide-ester)aromatique à la place d'un dianhydride aromatique. Cette réaction donne, par chauffage à haute température, des polyimides avec libération d'une molécule d'eau et d'une molécule d'alcool pour chaque cycle imide formé. Ces deux composés volatils servent d'agents porophores dans la fabrication des matériaux cellulaires en polyimides. Comme la quantité de produits volatils libérée est relativement importante, la réaction est généralement conduite en deux étapes. Une première étape de polycondensation partielle est effectuée en solution pour former des oligomères imides, qui sont isolés sous forme de poudre par précipitation dans un milieu non solvant. C'est cette poudre fusible qui, éventuellement mélangée à divers additifs, est placée dans un moule et chauffée au-dessus de sa température de fusion. L'expansion du matériau est provoquée par la poursuite de la réaction de polycondensation.

Cette technique de fabrication a été utilisée avec de nombreux mélanges de monomères. On peut citer, à titre d'exemple d'illustration de cette méthode, le brevet US-A-3 502 712, dans lequel il est décrit la réaction d'un diester de l'acide benzophénone-tétracarboxylique-3,3',4,4' avec la métaphénylènediamine. L'utilisation d'un mélange de diamines, en vue de former des mousses de polyimides plus souples, comprenant des diamines aromatiques et des diamines flexibles comme les acrylonitrilebutadiène-diamines est par exemple décrite dans le brevet US-A-4 456 862 ou les diamino-poly(diméthylsiloxanes) dans le brevet US-A-4 535 099.

Les différentes méthodes exposées ci-dessus permettent de fabriquer des mousses thermostables en polyimides ayant des caractéristiques très variées. Elles peuvent être rigides, semi-flexibles ou flexibles selon la nature des monomères ou des polymères employés pour les préparer. Elles ont généralement une porosité ouverte, mais dans certains cas celle-ci peut être fermée, et elles couvrent un assez large domaine de densité et de résistance à la compression.

Mais, d'une façon générale, la plupart de ces procédés de fabrication demande un contrôle sévère des conditions de synthèse des polymères et du protocole de mise en oeuvre de ces polymères pour obtenir des résultats reproductibles.

Les problèmes rencontrés pour la préparation des matériaux alvéolaires en polyimides se retrouvent également pour la préparation de la plupart des matériaux alvéolaires thermoplastiques thermostables que l'on obtient à partir de polymères thermoplastiques ayant une température de transition vitreuse élevée. En particulier, l'obtention de matériaux alvéolaires par élévation de température, qui est une méthode a priori très simple, est rendue délicate et son application est difficile, car la température de mise en oeuvre du polymère de départ pour l'obtention du mélange permettant l'obtention ultérieure du matériau en mousse est élevée (souvent 300 à 400 °C) et souvent très supérieure à la température de déclenchement de l'agent porophore (souvent 150 à 250 °C).

### Résumé de l'invention

La présente invention concerne des matériaux alvéolaires conservant les principales propriétés des matériaux alvéolaires thermostables de l'art antérieur, mais dont la mise en oeuvre est rendue moins délicate par l'utilisation de mélanges de polymères thermostables modifiés dont les températures de mise en oeuvre pour l'obtention de matériaux alvéolaires, en particulier par élévation de température, sont de l'ordre de la température de déclenchement de l'agent porophore ou relativement proche de ce seuil de déclenchement.

### Description détaillée de l'invention

Les matériaux alvéolaires de la présente invention se définissent comme étant caractérisés en ce qu'ils comprennent au moins un polymère thermoplastique thermostable, au moins une résine époxyde modifiée par au moins une polyamine aromatique et au moins un agent porogène ou le (ou les) produits(s) de dégradation dudit agent porogène.

Au sens de la présente description, on désigne par le terme polymère thermoplastique thermostable tout polymère thermoplastique présentant des propriétés mécaniques suffisantes pour pouvoir être encore utilisé à une température supérieure à 150 °C. Cette définition est celle communément admise par les hommes du métier et par exemple reprise dans l'ouvrage de base que constitue l'encyclopédie Ulmann's Encyclopedia of Industrial Chemistry (voir volume A21, page 449, de la cinquième édition publiée en 1992).

Les matériaux alvéolaires de la présente invention contiennent au moins un polymère thermoplastique thermostable, de préférence amorphe, le plus souvent choisi dans le groupe formé par les polyétherimides (PEI), les polysulfones (PSU) en particulier les polyéthersulfones (PES) et les polyphénylène-sulfones (PPS), et les polyphénylèneéthers (PPE). Ces matériaux alvéolaires contiennent au moins une résine époxyde modifiée par au moins une polyamine aromatique, ladite résine étant habituellement formée à partir d'au moins un polyépoxyde contenant dans sa molécule au moins 2 groupes époxydes et d'au moins une polyamine aromatique, de préférence encombrée, comportant le plus souvent dans sa molécule au moins 2 groupes amino primaires, le rapport molaire de la polyamine à l'époxyde étant le plus souvent tel que, à chaque groupe amino il corresponde de 1,6 à 2,6 groupes époxydes. Le plus souvent, la polyamine aromatique utilisée comporte au moins un substituant alcoyle ayant de 1 à 12 atomes de carbone situé en alpha de l'un des groupes amino.

Les polyétherimides utilisés pour fabriquer les matériaux alvéolaires selon la présente invention sont le plus souvent choisis dans le groupe des polyétherimides (PEI) vendus sur le marché et en particulier parmi les produits commercialisés par la société General Electric Plastics sous la dénomination ULTEM® . Le terme polysulfone peut générer une ambiguïté. En effet, le premier polymère d'importance commerciale dont le motif de base contient un groupe sulfone - SO₂- est le polymère commercialisé par la société AMOCO sous l'appellation UDEL® . De ce fait, cette polysulfone particulière reçoit souvent l'appellation générique de polysulfone. Au sens de la description, le terme polysulfone recouvre le sens générique, et n'a pas uniquement le sens limitatif de la polysulfone de type UDEL® . Les polysulfones utilisées pour fabriquer les matériaux alvéolaires selon la présente invention sont le plus souvent choisies dans le groupe formé par les polysulfones aromatiques et, de façon préférée, les polysulfones de type UDEL® , mais aussi les polyéthersulfones de type RADEL A® , commercialisées par la société AMOCO, et les polyphénylènesulfones de type RADEL R® , également commercialisées par la société AMOCO. Les polyphénylène-éthers (PPE) utilisés pour fabriquer les matériaux alvéolaires selon la présente invention sont le plus souvent les polyphénylène-éthers commercialisés par la société General Electric Plastics sous la marque NORYL® . Ces polymères sont souvent dénommés aussi poly(phénylèneoxydes) ou en abrégé PPO.

La résine époxyde que l'on utilise dans le cadre de la présente invention est le plus souvent choisie dans le groupe formé par les résines commerciales suivantes : la résine diglycidyléther du bis-phénol-A ou du bis-phénol-F, la résine de bis-phénol formol, la résine phénol-novolaque, les résines cycloaliphatiques, les résines tri- ou tétrafonctionnelles, les résines formées à partir de triglycidyléther-isocyanurate et/ou de triglycidyléther-cyanurate et/ou de triglycidyl-cyanurate et/ou de triglycidyl-isocyanurate ou les mélanges d'au moins deux de ces résines. Les résines époxydes obtenues à partir de composés époxydés cités dans le brevet US-A-4 921 047 sont également utilisables dans le cadre de la présente invention.

Parmi les polyamines aromatiques utilisées dans le cadre de la présente invention pour modifier les résines époxydes, on peut considérer une première série d'amines aromatiques comportant un seul noyau aromatique comme par exemple le 3,5-diéthyl-2,4-diaminotoluène, le 3,5-diéthyl-2,6-diaminotoluène et les mélanges de ces deux isomères. On utilise le plus souvent un mélange de ces deux isomères, que l'on dénomme généralement DETDA.

Dans une deuxième série d'amines utilisées dans le cadre de la présente invention, on considère les amines comportant au moins deux noyaux aromatiques, ces deux noyaux aromatiques étant généralement reliés l'un à l'autre par un reste hydrocarboné bivalent, linéaire ou ramifié, comportant de 1 à 18 atomes de carbone. Ces deux noyaux aromatiques sont soit reliés par un groupe alcoyle bivalent, soit reliés l'un à l'autre par un reste hydrocarboné bivalent linéaire ou ramifié ayant de 6 à 18 atomes de carbone et comportant un noyau aromatique.

La polyamine aromatique peut aussi comporter au moins un substituant choisi dans le groupe formé par le fluor, l'iode, le brome et le chlore. Elle comporte de préférence au moins deux substituants alcoyles, situés de part et d'autre d'un groupe amino.

Dans le cas où les deux noyaux aromatiques sont reliés par un reste alcoylène bivalent, ce reste sera de préférence un groupe méthylidène non substitué, ou substitué par au moins un radical choisi parmi les radicaux alcoyles et les radicaux halogénoalcoyles ayant de 1 à 3 atomes de carbone. Par exemple, ce reste alcoylène sera choisi dans le groupe formé par le groupe méthylidène, le groupe isopropylidène, les groupes halogénoisopropylidènes, tels que le groupe hexafluoroisopropylidène. Dans ce cas, l'amine est de préférence choisie dans le groupe formé par:
- la 4,4'-méthylène-bis(2,6-diméthylaniline) ou M-DMA;
- la 4,4'-méthylène-bis(2-isopropyl-6-méthyl-aniline) ou M-MIPA;
- la 4,4'-méthylène-bis(2,6-diéthylaniline) ou M-DEA;
- la 4,4'-méthylène-bis(2,6-diisopropylaniline) ou M-DIPA; et
- la 4,4'-méthylène-bis(3-chloro-2,6-diéthylaniline) ou M-CDEA.

Parmi ces amines, la 4,4'-méthylène-bis(2,6-diéthylaniline) et la 4,4'-méthylène- bis (3-chloro-2,6-diéthylaniline) présentent un intérêt particulier.

Dans le cas où l'amine comporte deux noyaux aromatiques qui sont reliés l'un à l'autre par un reste hydrocarboné bivalent substitué ou non substitué ayant de 6 à 18 atomes de carbone et comportant un noyau aromatique, elle sera de préférence choisie dans le groupe formé par:
- la 4,4'-(phénylène-diisopropyl)-bis(2,6-diméthyl-aniline);
- la 4,4'-(phénylène-diisopropyl)-bis(2,6-diéthyl-aniline);
- la 4,4'-(phénylène-diisopropyl)-bis(2,6-dipropyl-aniline);
- la 4,4'-(phénylène-diisopropyl)-bis(2,6-diisopropyl-aniline);
- la 4,4'-(phénylène-diisopropyl)-bis(2,6-diméthyl-3-chloro-aniline);
- la 4,4'-(phénylène-diisopropyl)-bis(2,6-diéthyl-3-chloro-aniline);
- la 4,4'-(phénylène-diisopropyl)-bis(2,6-dipropyl-3-chloro-aniline);
- la 4,4'-(phénylène-diisopropyl)-bis(2,6-diisopropyl-3-chloro-aniline);
- la 3,3'-(phénylène-diisopropyl)-bis(2,6-diméthyl-aniline);
- la 3,3'-(phénylène-diisopropyl)-bis(2,6-diéthyl-aniline);
- la 3,3'-(phénylène-diisopropyl)-bis(2,6-dipropyl-aniline);
- la 3,3'-(phénylène-diisopropyl)-bis(2,6-diméthyl-3-chloro-aniline);
- la 3,3'-(phénylène-diisopropyl)-bis(2,6-diéthyl-3-chloro-aniline);
- la 3,3'-(phénylène-diisopropyl)bis(2,6-dipropyl-3-chloro-aniline);
- la 3,3'-(phénylène-diisopropyl)-bis(2,6-diisopropyl-aniline); et
- la 3,3'-(phénylène-diisopropyl)-bis(2,6-diisopropyl-3-chloro-aniline).

Les polyamines aromatiques préférées sont choisies en raison de leur faible réactivité et aussi en raison de leur caractère non toxique.

L'agent porogène que l'on emploie pour former les matériaux alvéolaires de la présente invention est choisi dans le groupe formé par les agents porogènes chimiques et les agents porogènes physiques. Ces agents porogènes sont des composés classiquement employés pour former des matériaux expansés bien connus des hommes du métier. Dans le matériau alvéolaire que l'on forme, on retrouve soit l'agent porogène tel quel, par exemple lorsqu'il s'agit d'un gaz ou d'un composé qui forme un gaz par élévation de température et provoque ainsi la formation des alvéoles, soit le (ou les) produit(s) de dégradation dudit agent porogène lorsque l'on utilise un composé qui par élévation de température va se transformer en libérant un gaz provoquant ainsi la formation des alvéoles dans la composition de polymères. A titre d'exemples d'agents porogènes physiques que l'on utilise pour la préparation des matériaux alvéolaires de la présente invention, on peut citer des composés liquides ou gazeux tels que l'azote, le dioxyde de carbone, des hydrocarbures légers tels que le méthane, l'éthane, le propane, le butane, le pentane, le cyclopentane, l'hexane ou l'isoheptane, les chlorofluorhydrocarbures comme les chlorofluorocarbones (CFC) de type fréon, ou les composés similaires hydrogénés comme les hydrochlorofluorocarbones (HCFC). A titre d'exemples d'agents porogènes chimiques que l'on utilise pour la préparation des matériaux alvéolaires de la présente invention, on peut citer des composés solides qui se décomposent en formant un gaz, à une température propre à chaque agent porogène considéré. On utilise le plus souvent des agents porogènes chimiques dont la température de décomposition est d'environ 150 à 250 °C et fréquemment d'environ 180 à 250 °C. Ces agents porogènes chimiques sont des composés bien connus des hommes du métier. A titre d'exemples non limitatifs, on utilise des composés organiques tels que les composés azoïques et en particulier l'azodicarbonamide (1,1'-azobisformamide), les composés N-nitroso, les hydrazides, par exemple le p-toluène sulfonyl hydrazide ou l'oxybis(benzène sulfonyl hydrazide, le paratoluènesulfonyl-semicarbazide, ou des composés inorganiques tels que le borohydrure de sodium, les sels d'ammonium des acides organiques ou minéraux, les bicarbonates de métaux alcalins ou alcalino-terreux, les mélanges de plusieurs composés qui par réaction entre eux libèrent un composé gazeux, par exemple les mélanges de carbonates et d'acides (bicarbonate de métal alcalin ou alcalino-terreux avec l'acide citrique).

De préférence, le polymère thermoplastique thermostable représente environ 15 à 98 %, et de manière encore plus préférée de 35 à 80 % en masse par rapport à la masse totale du (ou des) polymère(s) thermoplastique(s) et de la résine époxyde modifiée par au moins une polyamine aromatique. De préférence, la résine époxyde modifiée par au moins une polyamine aromatique représente environ 2 à 85 %, et de manière encore plus préférée, environ 20 à 65 %, en masse par rapport à la masse totale du (ou des) polymère(s) thermoplastique(s) et de la résine époxyde. La teneur en agent porogène ou en produit(s) de dégradation dudit agent porogène est habituellement d'environ 0,1 à 5 % en masse et le plus souvent d'environ 0,5 à 2,5 % en masse par rapport à la masse totale du matériau alvéolaire.

Les matériaux alvéolaires selon la présente invention peuvent contenir un polymère thermoplastique thermostable unique ou un mélange de plusieurs polymères thermoplastiques thermostables, ou encore au moins un polymère thermoplastique thermostable et au moins un autre polymère. A titre d'exemples d'autres polymères, on peut citer les polyéthercétones, de préférence aromatiques (par exemple les produits vendus par la société ICI tels que la poly(oxy-1,4-phénylènecarbonyl-1,4-phenylène), en abrégé PEK, ou la poly(oxy-1,4-phénylèneoxy-1,4-phénylènecarbonyl-1,4-phénylène), en abrégé PEEK, ou les produits vendus par les sociétés Du Pont, Amoco, Hoechst ou BASF tels que par exemple ceux mentionnés dans Ullmann's Encyclopedia of Industrial Chemistry vol. A21, page 458). On peut également citer comme autres polymères les polysulfures d'arylène comme par exemple le polysulfure de phénylène (PPS) vendu par la société Phillips Petroleum sous la marque RYTON ®. On peut également citer comme autres polymères les polycarbonates (par exemple le produit vendu par la société General Electric Plastics sous la marque LEXAN® ) et les élastomères thermoplastiques qui permettent le plus souvent d'améliorer les propriétés mécaniques des matériaux alvéolaires de la présente invention, comme par exemple, la résistance au choc et la flexibilité. Lesdits élastomères sont linéaires ou ramifiés, greffés ou non greffés, séquencés ou non séquencés. Ils peuvent comporter des fonctions réactives, par exemple du type anhydride, acide, époxyde, alcool ou autres. L'ajout d'élastomères thermoplastiques permet d'augmenter la souplesse des produits expansés obtenus et d'améliorer leur résistance au choc. A titre d'exemples non limitatifs, les élastomères thermoplastiques utilisés le plus souvent sont le styrène-éthylène-butène-styrène, SEBS en abrégé, le styrène-éthylène-propylène-styrène, SEPS en abrégé, le styrène-butadiène-styrène, SBS en abrégé, le styrène-isoprène-styrène, SIS en abrégé, ou les polyuréthannes. A titre d'exemples de matériaux alvéolaires selon la présente invention contenant plusieurs polymères thermoplastiques thermostables et un élastomère, on peut citer un matériau contenant du PEI, du PPE, une résine époxyde modifiée et du SEBS en une quantité représentant environ 14 % en masse par rapport à la masse totale des polymères thermoplastiques thermostables et de la résine époxyde modifiée.

Lorsque les matériaux alvéolaires selon l'invention contiennent, outre au moins un polymère thermoplastique thermostable, au moins une résine époxyde modifiée par au moins une polyamine aromatique, et au moins un agent porogène ou le (ou les) produits(s) de dégradation dudit agent porogène, au moins un autre polymère, ce (ou ces) autre(s) polymère(s) représente(nt) habituellement environ 1 à 50 % en masse par rapport à la masse totale des polymères thermoplastiques thermostables et de la résine époxyde modifiée par au moins une polyamine aromatique. La teneur en élastomères thermoplastiques est cependant habituellement inférieure à environ 20 % en masse par rapport à la masse totale des polymères thermoplastiques et de la résine époxyde modifiée par au moins une polyamine aromatique.

Les matériaux alvéolaires selon la présente invention peuvent aussi contenir des catalyseurs actifs dans la réaction entre les résines époxydes et les polyamines aromatiques encombrées. Les catalyseurs actifs les plus souvent utilisés sont les imidazoles, les amines tertiaires et des complexes à base de bore trifluoré. On peut aussi ajouter des additifs choisis le plus souvent dans le groupe formé par les antioxydants, les pigments, les promoteurs d'adhérence, les stabilisateurs à la chaleur, au rayonnement et plus particulièrement au rayonnement ultraviolet, les retardateurs de flamme, les agents de démoulage, les agents de nucléation de moussage, les agents de dispersion, les lubrifiants, les colorants, les plastifiants, les produits ignifugeants, les agents de pontage, les surfactants, les agents de renfort, les charges renforçantes organiques, minérales ou organométalliques, les fibres de renfort minérales ou organiques, telles que par exemple les fibres de verre, de carbone ou de bore. Les matériaux alvéolaires selon la présente invention peuvent encore contenir des charges organiques ou minérales telles que par exemple du talc, de la silice ou du dioxyde de titane. Certains matériaux alvéolaires selon la présente invention, habituellement dénommés mousses syntactiques par les hommes du métier, contiennent habituellement des corps creux ou moins denses qui ont participé à la création de la porosité dudit matériaux. Ces corps creux peuvent être par exemple des microsphères de verre ou d'une autre matière ou des cénosphères.

Les matériaux alvéolaires de la présente invention sont préparés par des méthodes classiques de préparation de matériaux en mousse bien connues des hommes du métier. Ces matériaux alvéolaires sont par exemple obtenus par formation d'une composition contenant les divers constituants du matériau alvéolaire que l'on veut préparer par mise en contact de ces constituants et en particulier d'au moins un polymère thermoplastique thermostable, d'au moins une résine époxyde modifiée par au moins une polyamine aromatique, avec au moins un agent moussant physique et/ou chimique, suivi de la formation du matériau alvéolaire dans des conditions classiques de formation dudit matériau alvéolaire à partir de ladite composition. Le plus souvent les matériaux alvéolaires de la présente invention sont préparés en utilisant au moins un agent porogène de type chimique. On utilise le plus souvent un seul agent porogène chimique.

La préparation des matériaux alvéolaires selon l'invention peut comprendre la formation d'un mélange contenant les divers constituants rentrant dans la composition du matériau alvéolaire au sein d'un mélangeur ou dans une extrudeuse. Le plus souvent, on utilise une extrudeuse double vis de la société CLEXTRAL, cette extrudeuse comprenant plusieurs niveaux d'introduction des divers constituants à mélanger.

A titre d'exemple, le mélange des divers constituants peut être obtenu par introduction d'au moins un polymère thermoplastique thermostable, et d'au moins un agent porogène chimique, ainsi que des additifs et des charges éventuels et éventuellement d'au moins un autre polymère tel que par exemple un élastomère thermoplastique, dans une zone d'entrée de l'extrudeuse, située à l'extrémité opposée de la zone de récupération de l'extrudat. Dans cette zone d'entrée, la température est habituellement d'environ 100 °C. Les différents produits sont ensuite entraînés dans une deuxième zone où la température est habituellement d'environ 150 °C et dans laquelle on introduit au moins une résine époxyde avec au moins une polyamine aromatique. Ces produits sont entraînés par l'extrudeuse double vis, la température à l'intérieur de cette extrudeuse augmentant progressivement pour atteindre généralement une température inférieure à la température de décomposition chimique de l'agent porogène chimique, en sortie d'extrudeuse. Dans le cas où les matériaux en mousses sont obtenus à partir de plusieurs agents porogènes chimiques de nature différente, ladite température en sortie de l'extrudeuse est de préférence inférieure à la plus petite température de décomposition chimique des différents agents porogènes.

On peut aussi introduire isolément chaque constituant du mélange dans l'extrudeuse, par des zones d'entrée différentes ou par une seule zone d'entrée.

De manière préférée, on mélange les résines époxydes et les polyamines aromatiques, pour former les résines époxydes modifiées utilisées pour la fabrication des matériaux alvéolaires selon la présente invention. Le plus souvent, les résines époxydes modifiées sont chauffées à une température habituellement comprise entre environ 50 et 120 °C et le plus souvent entre 50 et 90 °C avant leur introduction dans une extrudeuse double vis.

Le (ou les) agent(s) porogène(s), en particulier de type chimique, peut (peuvent) être mélangé(s) au produit en poudre obtenu par broyage de l'extrudat contenant le polymère thermoplastique thermostable, la résine époxyde modifiée et éventuellement des charges, des additifs et d'autres polymères comme mentionné ci-dessus, de façon à obtenir une poudre à partir de laquelle on peut former le matériau alvéolaire. Il est aussi possible de mélanger le (ou les) agent(s) porogène(s), en particulier de type chimique, avec le (ou les) polymère(s) thermoplastique(s) thermostable(s) et d'introduire ensuite ce mélange dans l'extrudeuse. Dans ce dernier cas, on introduit en général en tête de l'ex-trudeuse le mélange du (ou des) polymère(s) thermoplastique(s) thermostable(s) et du (ou des) agent(s) porogène(s), puis en aval dans le sens d'avancement du mélange vers la sortie de l'extrudeuse, on introduit le (ou les) résine(s) époxyde(s) modifiée(s).

Le débit des résines époxydes modifiées étant habituellement constant, on introduit lesdites résines par exemple au moyen d'une pompe à engrenage. Par contre, le plus souvent, du (ou des) polymère(s) thermoplastique(s) thermostable(s) et du (ou des) agent(s) porogène(s) est (sont) introduit(s) au moyen d'un doseur pondéral, en vue d'obtenir des mélanges avec des rapports de résines époxydes modifiées / polymères thermoplastiques thermostables différents.

Le mélange obtenu en sortie d'extrudeuse est homogène. Il est refroidi le plus souvent à l'air, généralement granulé, puis broyé, afin d'obtenir une poudre. Ladite poudre est alors pressée le plus souvent dans un moule à une température généralement comprise entre environ 180 et 260 °C, pendant une durée d'environ 0,5 à 5 heures (h), le plus souvent d'environ 1 à 3 heures. Le produit peut ensuite être recuit à une température habituellement comprise entre environ 190 et 270 °C souvent d'environ 200 à 260 °C, pendant une durée d'environ 0,5 à 15 h, souvent d'environ 1 à 10 h. Ce recuit est de préférence effectué au moyen d'une étuve. On obtient des plaques de matériau en mousse de diverses densités selon la quantité de poudre introduite dans le moule. L'expansion peut également être obtenue en continu, par exemple par passage dans un conformateur en sortie de l'extrudeuse. Dans ce cas on peut travailler en opérant à des températures supérieures ou égales à la température de déclenchement de l'agent porogène.

Les matériaux en mousse de l'invention peuvent être utilisés pour l'isolation thermique et phonique, par exemple dans le domaine du bâtiment, de l'habitat, des transports, de l'exploitation pétrolière, du transport d'hydrocarbures et du raffinage. Ils peuvent être également employés pour la lutte contre les incendies, notamment en réduisant l'émission de gaz toxiques et/ou de fumées, et en diminuant la facilité d'ignition.

La présente invention concerne aussi les compositions contenant au moins un polymère thermoplastique thermostable, au moins une résine époxyde modifiée par au moins une polyamine aromatique et au moins un agent porogène à partir desquelles on peut fabriquer les matériaux alvéolaires décrits ci-dessus. L'ensemble des diverses possibilités décrites ci-dessus pour les matériaux alvéolaires s'appliquent également aux compositions à partir desquelles on fabrique ces matériaux alvéolaires.

La description complète de toutes demandes, tous brevets et publications, cités ci-dessus et ci-dessous, et de la demande française correspondante 98/14.320, déposée le 13 novembre 1998, est incluse par référence dans la présente description.

Les exemples suivants illustrent l'invention sans en limiter la portée.

### Exemple 1:

Cet exemple concerne la préparation d'un matériau alvéolaire contenant un polyétherimide et une résine époxyde modifiée par mélange de poudre et addition de l'agent porogène chimique, puis formation du matériau en mousse par chauffage et recuit. On utilise une extrudeuse bi-vis CLEXTRAL vendue sous la référence BC21, dont le rapport longueur sur diamètre est de 28. Les vis ont un diamètre de 25 millimètres (mm) et l'extrudeuse est équipée d'une filière dont le diamètre est de 4 mm.

Le polyétherimide utilisé est commercialisé par la société General Electric Plastics sous la référence ULTEM 1000. Sa masse moléculaire moyenne en nombre est de 26 000 grammes / mole (g/mol) et sa granulométrie est de 300 micromètres (µm). Avant son introduction dans l'extrudeuse, le polyétherimide est séché dans une étuve à 120 °C pendant 2 heures (h).

La résine époxyde modifiée comprend 8,016 kilogrammes (kg) de diglycidyléther du bis-phénol-A (DGEBA), commercialisé sous la référence LY556 par la société Ciba-Geigy et 3,984 kg de 4,4'-méthylène-bis(3-chloro-2,6-diéthylaniline) (MCDEA), commercialisée par la société Lonza.

Avant son introduction dans l'extrudeuse, la résine époxyde modifiée est chauffée à 80 °C, sous agitation. On a mesuré l'avancement de réaction de ce mélange par chromatographie d'exclusion de taille. La réactivité est très faible: 5 heures à 60 °C conduisent à un avancement de réaction de 1 %.

La résine époxyde modifiée est introduite dans l'extrudeuse au moyen d'une pompe à engrenage et au débit constant de 1 kilogramme/heure (kg/h). Le polyétherimide est introduit au moyen d'un doseur pondéral au débit de 1,5 kg/h, pour obtenir un mélange contenant 40 % en masse de résine époxyde modifiée, le pourcentage de résine époxyde modifiée étant calculé par rapport à la masse totale du mélange formé de polyétherimide et de résine époxyde modifiée.

Le polyétherimide ULTEM 1000 est introduit dans une zone d'entrée de l'extrudeuse située à l'extrémité opposée de la zone de récupération de l'extrudat. Dans cette zone d'entrée, la température est de 100 °C. Ce produit est entraîné dans une deuxième zone de l'extrudeuse dans laquelle la température est de 150 °C et dans laquelle on introduit la résine époxyde modifiée décrite ci-dessus. L'ULTEM 1000 est introduit au moyen d'un doseur pondéral au débit de 1,5 kg/h et la résine époxyde modifiée est introduite par une pompe à engrenage au débit constant de 1 kg/h. Ces composés sont entraînés par l'extrudeuse rotative jusqu'à la sortie de l'extrudat. La température à l'intérieur de l'extrudeuse augmente progressivement pour atteindre 170 °C à la sortie de l'extrudeuse.

En sortie d'extrudeuse, on obtient un mélange homogène, contenant 40 % en masse de résine époxyde modifiée, qui est refroidi à l'air, granulé, puis broyé, pour obtenir une poudre.

On ajoute à la poudre de l'azodicarbonamide comme agent porogène en quantité telle qu'il représente une teneur en masse de 1 % de la masse totale de la composition résultante. La température de décomposition chimique dudit agent porogène est de 190 °C. On introduit 70 g de cette composition dans un moule de 255 cm³. Le moule est fermé hermétiquement, puis porté à 200 °C pendant 2 h. On procède ensuite à un recuit en portant le moule à 220 °C pendant deux heures. Après refroidissement et ouverture du moule, on récupère une plaque de matériau alvéolaire de densité égale à 0,3.

Des mesures de température de transition vitreuse, de conductivité thermique et de contrainte au seuil d'écoulement ont été effectuées sur ces plaques de matériau alvéolaire.

Les propriétés thermo-mécaniques du matériau alvéolaire ont été déterminées par une analyse DMTA (Dynamic Mechanical Thermal Analysis), en simple encastrement à une fréquence de 1 Hz. La température de transition vitreuse (Tg) mesurée est de 195 °C (début de la transition vitreuse).

La mesure de la contrainte au seuil d'écoulement a été effectuée sur une machine en traction de la société MTS de type (2/M), munie d'un dispositif inverseur pour faire fonctionner ladite machine en compression. Cette machine comprend une tête de mesure de 10 kiloNewton (kN) et une traverse opérant à une vitesse de 1 millimètre/minute (mm/min). Les mesures sont effectuées sur cinq éprouvettes ayant chacune la forme d'un prisme droit selon la norme ISO 844. La valeur moyenne de la contrainte au seuil d'écoulement est de 7 MPa pour le matériau alvéolaire obtenu ci-dessus ayant une densité de 0,3.

Les propriétés isolantes de la mousse ont été déterminées par la mesure de la conductivité thermique selon la norme ASTM C518, avec un appareil RAPID-K de la société Dynatec Technologie. La conductivité thermique mesurée est de 0,074 watts/mètre.Kelvin (W/m.K) pour le matériau alvéolaire obtenu ci-dessus ayant une densité de 0,3.

### Exemple 2:

Cet exemple concerne la préparation d'un matériau en mousse contenant les mêmes constituants que celui formé dans l'exemple 1 en quantité identique. Dans cette réalisation l'azodicarbonamide utilisé comme agent porogène en quantité telle qu'il représente une teneur en masse de 1 % de la masse totale du matériau alvéolaire final est mélangé au polyétherimide avant son introduction dans l'extrudeuse. On obtient ainsi en sortie de l'extrudeuse un mélange homogène, contenant 40 % en masse de résine époxyde modifiée, le polyétherimide et l'agent porogène. Ce mélange est refroidi à l'air, granulé puis broyé, pour obtenir une poudre que l'on utilise ensuite pour former le matériau alvéolaire en suivant la procédure décrite dans l'exemple 1. Les valeurs de résistance à la compression, de conductivité thermique et de transition vitreuse mesurées comme dans l'exemple 1 sont identiques à celles trouvées pour le matériau alvéolaire préparé dans l'exemple 1.

### Exemple 3:

Cet exemple décrit la préparation d'un matériau en mousse contenant comme polymère thermoplastique thermostable la polyphénylènesulfone commercialisé par la société AMOCO sous la dénomination RADEL R® ayant une granulométrie de 300 micromètres, la résine époxyde modifiée est identique à celle décrite dans l'exemple 1 et l'agent porogène est également celui utilisé dans l'exemple 1. Les conditions de préparation et les quantités de produits employées sont les mêmes que dans l'exemple 1. La quantité de poudre introduite dans le moule est de 90 g. Après refroidissement et ouverture du moule, on récupère une plaque de matériau alvéolaire de densité égale à 0,4.

Les propriétés thermo-mécaniques du matériau alvéolaire obtenu ont été déterminées par une analyse DMTA (Dynamic Mechanical Thermal Analysis), en simple encastrement à une fréquence de 1 Hz. La température de transition vitreuse (Tg) mesurée est de 204 °C (début de la transition vitreuse).

La mesure de la contrainte au seuil d'écoulement a été effectuée sur une machine en traction de la société MTS de type (2/M), munie d'un dispositif inverseur pour faire fonctionner ladite machine en compression. Cette machine comprend une tête de mesure de 10 kiloNewton (kN) et une traverse opérant à une vitesse de 1 millimètre/minute (mm/min). Les mesures sont effectuées sur cinq éprouvettes ayant chacune la forme d'un prisme droit selon la norme ISO 844. La valeur moyenne de la contrainte au seuil d'écoulement est de 10 MPa pour le matériau alvéolaire obtenu ci-dessus ayant une densité de 0,4.

Les propriétés isolantes de la mousse ont été déterminées par la mesure de la conductivité thermique selon la norme ASTM C518, avec un appareil RAPID-K de la société Dynatec Technologie. La conductivité thermique mesurée est de 0,086 watt/mètre.Kelvin (W/m.K) pour le matériau alvéolaire obtenu ci-dessus ayant une densité de 0,4.

### Exemple 4:

On reproduit à l'identique les différentes étapes de l'exemple 3, mais en utilisant le paratoluènesulfonyl-semicarbazide, comme agent porogène chimique. La température de décomposition chimique dudit agent porogène étant de 230 °C. On introduit 90 g de cette composition dans un moule de 255 cm³. Le moule est fermé hermétiquement, puis porté à 240 °C pendant 2 h. On procède ensuite à un recuit en ponant le moule à 260 °C pendant deux heures. Après refroidissement et ouverture du moule, on récupère une plaque de matériau alvéolaire de densité égale à 0,4. La température de transition vitreuse, la conductivité thermique et la contrainte au seuil d'écoulement sont l'identiques à celles trouvées sur le matériau en mousse obtenu selon l'exemple 3.

### Exemple 5:

Cet exemple décrit la préparation d'un matériau en mousse contenant comme polymère thermoplastique thermostable le polyphénylène-éther commercialisé par la société General Electric Plastics sous la référence PPE 800 de masse moléculaire en nombre voisine de 12 000 g/mol ayant une granulométrie de 300 micromètres. La résine époxyde modifiée est identique à celle décrite dans l'exemple 1 et l'agent porogène est également celui utilisé dans l'exemple 1. Les conditions de préparation et les quantités de produits employées sont les mêmes que dans l'exemple 1. La quantité de poudre introduite dans le moule est de 90 g. Après refroidissement et ouverture du moule on récupère une plaque de matériau alvéolaire de densité égale à 0,4.

Les propriétés thermo-mécaniques du matériau alvéolaire obtenu ont été déterminées par une analyse DMTA (Dynamic Mechanical Thermal Analysis), en simple encastrement à une fréquence de 1 Hz. La température de transition vitreuse (Tg) mesurée est de 204 °C (début de la transition vitreuse).

La mesure de la contrainte au seuil d'écoulement a été effectuée sur une machine en traction de la société MTS de type (2/M), munie d'un dispositif inverseur pour faire fonctionner ladite machine en compression. Cette machine comprend une tête de mesure de 10 kiloNewton (kN) et une traverse opérant à une vitesse de 1 millimètre/minute (mm/min). Les mesures sont effectuées sur cinq éprouvettes ayant chacune la forme d'un prisme droit selon la norme ISO 844. La valeur moyenne de la contrainte au seuil d'écoulement est de 12 MPa pour le matériau alvéolaire obtenu ci-dessus ayant une densité de 0,4.

Les propriétés isolantes de la mousse ont été déterminées par la mesure de la conductivité thermique selon la norme ASTM C518, avec un appareil RAPID-K de la société Dynatec Technologie. La conductivité thermique mesurée est de 0,091 watt/mètre.Kelvin (W/m.K) pour le matériau alvéolaire obtenu ci-dessus ayant une densité de 0,4.

### Exemple 6:

On reproduit à l'identique les différentes étapes de l'exemple 5, mais en utilisant le paratoluènesulfonyl-semicarbazide, comme agent porogène chimique. La température de décomposition chimique dudit agent porogène étant de 230 °C. On introduit 90 g de cette composition dans un moule de 255 cm³. Le moule est fermé hermétiquement, puis porté à 240 °C pendant 2 h. On procède ensuite à un recuit en portant le moule à 260 °C pendant deux heures. Après refroidissement et ouverture du moule, on récupère une plaque de matériau alvéolaire de densité égale à 0,4. La température de transition vitreuse, la conductivité thermique et la contrainte au seuil d'écoulement sont identiques à celles trouvées sur le matériau en mousse obtenu selon l'exemple 5.

Les exemples qui précèdent peuvent être répétés avec des résultats analogues en substituant les réactifs et/ou les conditions générales ou particulières décrites dans l'invention à ceux mis en oeuvre dans ces exemples.

De plus, les modes de réalisation spécifiques qui précèdent doivent être considérés comme une simple illustration et non de quelque manière que ce soit, comme une limitation du reste de la description.

Au vu de la description qui précède, l'homme du métier peut aisément déterminer les caractéristiques essentielles de l'invention et, sans s'écarter de l'esprit et de la portée de celle-ci, y apporter divers changements ou modifications pour l'adapter à diverses utilisations et conditions de mise en oeuvre.

## Revendications

1. Matériau alvéolaire comprenant au moins un polymère thermoplastique thermostable, au moins une résine époxyde modifiée par au moins une polyamine aromatique et au moins un agent porogène ou le (ou les) produits(s) de dégradation dudit agent porogène.

2. Matériau alvéolaire selon la revendication 1 dans lequel le polymère thermoplastique thermostable est choisi dans le groupe consistant en les polymères thermoplastiques thermostables amorphes.

3. Matériau alvéolaire selon la revendication 1 ou 2 dans lequel le polymère thermoplastique thermostable est choisi dans le groupe consistant en les polyétherimides, les polysulfones et les polyphénylène-éthers.

4. Matériau alvéolaire selon l'une des revendications 1 à 3 dans lequel la résine époxyde modifiée par au moins une polyamine aromatique est formée à partir d'au moins un polyépoxyde contenant dans sa molécule au moins 2 groupes amino primaires, le rapport molaire de la polyamine à l'époxyde étant tel que, à chaque groupe amino, il corresponde de 1,6 à 2,6 groupes époxydes.

5. Matériau alvéolaire selon l'une des revendications 1 à 4 dans lequel la polyamine aromatique utilisée est choisie dans le groupe consistant en les amines aromatiques comportant un seul noyau aromatique et les amines aromatiques comportant au moins deux noyaux aromatiques, les deux noyaux aromatiques étant reliés l'un à l'autre par un reste hydrocarboné bivalent linéaire ou ramifié comportant de 1 à 18 atomes de carbone.

6. Matériau alvéolaire selon l'une des revendications 1 à 5 dans lequel la polyamine aromatique comporte au moins un substituant alcoyle ayant de 1 à 12 atomes de carbone situé(s) en alpha de l'un des groupes amino.

7. Matériau alvéolaire selon l'une des revendications 1 à 6 dans lequel la teneur en polymère(s) thermoplastique(s) est d'environ 15 à 98 % en masse par rapport à la masse totale du (ou des) polymère(s) thermoplastique(s) et de la résine époxyde ; la teneur en résine époxyde modifiée par au moins une polyamine aromatique est d'environ 2 à 85 % en masse par rapport à la masse totale du (ou des) polymère(s) thermoplastique(s) et de la résine époxyde ; et la teneur en agent porogène ou en produit(s) de dégradation dudit agent porogène est d'environ 0,1 à environ 5 % en masse par rapport à la masse totale du matériau alvéolaire.

8. Matériau alvéolaire selon l'une des revendications 1 à 7 caractérisé en ce qu'il contient au moins un polymère thermoplastique thermostable et au moins un autre polymère.

9. Matériau alvéolaire selon la revendication 8 dans lequel l'autre polymère est choisi dans le groupe formé par les polyéthercétones, les polysulfures d'arylène, les polycarbonates et les élastomères thermoplastiques.

10. Matériau alvéolaire selon l'une des revendications 1 à 9 caractérisé en ce qu'il contient au moins un additif choisi dans le groupe consistant en les catalyseurs actifs dans la réaction entre les résines époxydes et les amines encombrées, les antioxydants, les pigments, les promoteurs d'adhérence, les stabilisateurs à la chaleur, les stabilisateurs au rayonnement, les retardateurs de flamme, les agents de démoulage, les agents de nucléation de moussage, les agents de dispersion, les lubrifiants, les colorants, les plastifiants, les produits ignifugeants, les agents de pontage, les surfactants, les agents de renfort, les charges renforçantes organiques, minérales ou organométalliques, les fibres de renfort minérales ou organiques.

11. Matériau alvéolaire selon l'une des revendications 1 à 10 caractérisé en ce qu'il contient des charges organiques ou minérales, des corps creux ou moins denses qui ont participé à la création de la porosité dudit matériau.

12. Procédé de préparation d'un matériau alvéolaire selon l'une des revendications 1 à 11 caractérisé en ce que on forme une composition contenant les divers constituants du matériau alvéolaire que l'on veut préparer par mise en contact de ces constituants et en particulier d'au moins un polymère thermoplastique thermostable, d'au moins une résine époxyde modifiée par au moins une polyamine aromatique, avec au moins un agent porogène, suivie de la formation dudit matériau alvéolaire dans des conditions de formation dudit matériau alvéolaire à partir de ladite composition.

13. Utilisation d'un matériau alvéolaire selon l'une des revendications 1 à 11 ou d'un matériau alvéolaire obtenu par le procédé selon la revendication 12 dans le domaine du bâtiment, de l'habitat, des transports, de l'exploitation pétrolière, du transport d'hydrocarbures et du raffinage.

14. Composition contenant au moins un polymère thermoplastique thermostable, au moins une résine époxyde modifiée par au moins une polyamine aromatique et au moins un agent porogène pour la fabrication de matériaux alvéolaires selon l'une des revendications 1 à 11.
